(19) Europäisches Patentamt
European Patent Office
Office européen des brevets

(11) **EP 4 686 861 A1**

(12) **EUROPÄISCHE PATENTANMELDUNG**

(43) Veröffentlichungstag:
04.02.2026  Patentblatt 2026/06

(21) Anmeldenummer: 25191721.7

(22) Anmeldetag: **25.07.2025**

(51) Internationale Patentklassifikation (IPC):
$F16K\ 5/02^{(2006.01)}$   $F16K\ 5/06^{(2006.01)}$
$F16K\ 5/12^{(2006.01)}$   $F16K\ 47/04^{(2006.01)}$

(52) Gemeinsame Patentklassifikation (CPC):
**F16K 5/12; F16K 5/0207; F16K 5/0407;
F16K 5/0605; F16K 47/045**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **01.08.2024  DE 102024121897**

(71) Anmelder:
• **TKMS GmbH
24143 Kiel (DE)**

• **thyssenkrupp AG
45143 Essen (DE)**

(72) Erfinder:
• **Vöge, Thomas
24235 Laboe (DE)**
• **Tietgen, Finn Oliver
24248 Mönkeberg (DE)**

(74) Vertreter: **thyssenkrupp Intellectual Property
GmbH
ThyssenKrupp Allee 1
45143 Essen (DE)**

(54) **AUF AKUSTISCHE SIGNATUR OPTIMIERTES VENTIL**

(57)   Absperrkörper 10, wobei der Absperrkörper 10 eine erste Öffnung und eine zweite Öffnung aufweist, wobei der Absperrkörper 10 zwischen der ersten Öffnung und der zweiten Öffnung einen ersten Kanal 20 aufweist, dadurch gekennzeichnet, dass das Absperrkörper 10 wenigstens einen zweiten Kanal 30 aufweist, wobei der maximale Querschnitt des zweiten Kanals 30 kleiner ist als der minimale Querschnitt des ersten Kanals 20, wobei der zweite Kanal 30 eine Nebenöffnung 31 hat, wobei die Nebenöffnung 31 entweder neben der ersten Öffnung angeordnet ist oder in den ersten Kanal 20 benachbart zur ersten Öffnung und in einem spitzen Winkel kleiner 45 ° zwischen der Achse des ersten Kanals 20 und der Achse des zweiten Kanals 30 am Ort der Nebenöffnung 31, sodass der erste Kanal 20 und der zweite Kana 30l an der Nebenöffnung 31 in die gleiche Richtung durchströmt werden, wobei der zweite Kanal 30 einen Nebenauslass 32 aufweist, wobei der Nebenauslass 32 an dem der Nebenöffnung 31 gegenüberliegenden Ende des zweiten Kanals 30 angeordnet ist, wobei der Nebenauslass 32 in den ersten Kanal 20 mündet, wobei der zweite Kanal 30 in einem Winkel von mehr als 90 ° zwischen der Achse des ersten Kanals 20 und der Achse des zweiten Kanals 30 am Ort des Nebenauslasses 32 angeordnet ist, sodass die Strömungsrichtung des zweitens Kanals 30 der Strömungsrichtung des ersten Kanals 20 am Ort des Nebenauslasses 32 wenigstens anteilig entgegengerichtet ist.

Fig. 2

EP 4 686 861 A1

**Beschreibung**

Die Erfindung betrifft ein Ventil, welches beim Öffnen eine besonders geringe akustische Signatur aufweist.

Ventile werden eingesetzt, um Fluidströme zu versperren oder freizugeben. Hierzu wird oftmals ein Absperrkörper verwendet, welcher in dem Ventil bewegt wird, um den Durchfluss zu schließen, öffnen oder lenken. Beispielsweise kann ein Absperrkörper ein drehbarer Hahn sein, beispielsweise kugelförmig oder kegelförmig. Alternativ kann der Absperrkörper auch senkrecht zur Fluidrichtung bewegt werden. Neben reinen Absperrventilen können aber auch Mehrwegeventile zum Einsatz, als beispielsweise ein Dreiwegeventil. Beispielsweise werden T-förmige Verbindungen mit einem Ventil versehen, um die Fluidflussrichtung zwischen den Anschlüssen gezielt zu steuern. An der Basis des T (unten) befindet sich beispielsweise eine Schaltvorrichtung oder dergleichen, etwas in das das Fluid mal hinein, mal hinaus gefordert wird. Auf der einen Seite des T-Balken befindet sich ein Zulauf, auf der gegenüberliegenden der Ablauf. In diesem Beispiel wird dann ein Ventil mit einer rechtwinkligen Öffnung verwendet, um gezielt die Vorrichtung mit dem Zulauf oder dem Ablauf zu verbinden. In dem Moment, in dem das Ventil geöffnet wird und eine Strömung beginnt, so erzeugt die Druckwelle des Fluids bei der Umlenkung eine Druckstoß und damit ein Geräusch.

Üblicherweise wird ein solcher Absperrkörper für ein solches Ventil dadurch hergestellt, dass die beiden Arme des rechten Winkels durch Bohren in den Absperrkörper eingebracht werden.

Der Absperrkörper ist der bewegliche Teil eines Ventils. Alleine durch die Bewegung des Absperrkörpers erfolgt der Schaltvorgang des Ventils.

An Bord eines Unterseebootes sind derartige Transienten jedoch zu vermeiden, um die akustische Signatur so gering wie möglich zu halten und damit die Entdeckungsgefahr zu minimieren.

Aus der US 1 329 559 A ist das sogenannte Teslaventil bekannt, welches quasi als Diode oder Rückschlagventil wirkt und Fluidströmungen nur in eine Richtung durchlässt.

Aus der CN 1 12 901 475 A ist eine Spiralwirbel-Widerstands-Energieableitungsstruktur und eine Ventilplatte mit derselben bekannt.

Aufgabe der Erfindung ist es, ein Ventil bereitzustellen, dass beim Öffnen eine deutlich reduzierte Signatur aufweist.

Gelöst wird diese Aufgabe durch den Absperrkörper mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Absperrkörper weist eine erste Öffnung und eine zweite Öffnung auf. Ein Absperrkörper dient dazu, durch Drehung des Absperrkörpers im Ventil somit den Strom durch das Ventil freizugeben oder zu blockieren. Die Schaltung des Ventils erfolgt also alleine durch die Drehung des Absperrkörpers in gezielte Positionen. Die Öffnungen dienen dazu, das Fluid in der richtigen Schaltposition durch den Absperrkörper fließen zu lassen. Der Absperrkörper weist zwischen der ersten Öffnung und der zweiten Öffnung einen ersten Kanal auf. Das Fluid fließt also beispielsweise durch die erste Öffnung in den Absperrkörper und den ersten Kanal hinein, fließt durch den Kanal hindurch und verlässt den ersten Kanal und damit auch den Absperrkörper durch die zweite Öffnung. Durch Drehung kann der Absperrkörper zwischen einer offenen und einer geschlossenen Position geschaltet werden und so entweder Fluid durchlassen oder absperren.

Erfindungsgemäß weist der Absperrkörper wenigstens einen zweiten Kanal auf. Der maximale Querschnitt des zweiten Kanals ist kleiner als der minimale Querschnitt des ersten Kanals. Dadurch strömt mehr Fluid bei vollständiger Öffnung des Absperrkörpers durch den ersten Kanal als durch den zweiten Kanal. Der zweite Kanal hat eine Nebenöffnung. Weiter hat der zweite Kanal einen Nebenauslass. Der zweite Kanal erstreckt sich somit von der Nebenöffnung zum Nebenauslass und kann somit Fluid zwischen diesen führen. Die Nebenöffnung ist in einer ersten Alternative neben der ersten Öffnung angeordnet. In dieser Ausführung können die erste Öffnung und die Nebenöffnung nebeneinander auf der Oberfläche angeordnet und bevorzugt nah beieinander sein. Bevorzugt liegt die Nebenöffnung in Öffnungsrichtung des Absperrkörpers vor der ersten Öffnung. In einer zweiten Alternative mündet die Nebenöffnung in den ersten Kanal und zwar benachbart zur ersten Öffnung. Es wird also ein Teilstrom des gesamten den Absperrkörper durchströmenden Fluidstromes abgetrennt und durchströmt den zweiten Kanal, wobei dieser abgezweigte Teilstrom durch den geringeren Querschnitt kleiner ist. Der zweite Kanal ist also ein Nebenkanal zum ersten Kanal. Der erste Kanal weist an der Nebenöffnung eine erste Hauptströmungsrichtung auf, der zweite Kanal weist an der Nebenöffnung eine erste Nebenströmungsrichtung auf. Die erste Hauptströmungsrichtung und die erste Nebenströmungsrichtung weisen einen Winkel von weniger als 45° zueinander auf. Der erste Kanal und der zweite Kanal werden als im Bereich der Nebenöffnung im Wesentlichen in die gleiche Richtung durchströmt. Der zweite Kanal weist einen Nebenauslass auf. Der Nebenauslass ist an dem der Nebenöffnung gegenüberliegenden Ende des zweiten Kanals angeordnet. Der zweite Kanal führt somit von der Nebenöffnung zum Nebenauslass. Der Nebenauslass mündet in den ersten Kanal somit innerhalb des Absperrkörpers. Der erste Kanal weist an dem Nebenauslass eine zweite Hauptströmungsrichtung auf, der zweite Kanal weist an dem Nebenauslass eine zweite Nebenströmungsrichtung auf. Die zweite Hauptströmungsrichtung und die zweite Nebenströmungsrichtung weisen einen Winkel von mehr als 90 ° zueinander auf.

Dadurch ist die Strömung an der Zusammenführung wenigstens partiell entgegengerichtet. Dieses wiederum führt dazu, dass beim Öffnen des Ventils es eben nicht zu einem Druckstoß kommt, welcher bei der nächsten Fluidumlenkung insbesondere innerhalb des Absperrkörpers, ein Geräusch erzeugt.

Wie vorstehend ausgeführt ist der maximale Querschnitt des zweiten Kanals kleiner als der minimale Querschnitt des ersten Kanals. Dabei ist insbesondere gemeint, dass der maximale Querschnitt des zweiten Kanals nur einen Bruchteil des minimale Querschnitt des ersten Kanals ist. Insbesondere ist der maximale Querschnitt des zweiten Kanals höchstens ⅓, bevorzugt höchstens $\frac{1}{5}$, besonders bevorzugt höchstens $\frac{1}{10}$ des minimalen Querschnitt des ersten Kanals. Natürlich ist der Querschnitt des zweiten Kanals immer größer als null.

Während beim Teslaventil eine Reihe solcher entgegengeführter Strömungen nutzt, um ein Fluid nur in die entgegengesetzte Richtung fließen zu lassen und damit wie eine Sperrdiode zu wirken, wird hier Erfindungsgemäß gerade in "Sperrrichtung" durchströmt, dafür aber nur eine Stufe realisiert, sodass bei geöffnetem Ventil das Fluid noch immer und nur wenig gebremst den Absperrkörper durchströmen kann. Dieser Strömungswiderstand ist zwar unvorteilhaft, wird aber in Kauf genommen, um beim Öffnen die akustische Signatur deutlich zu reduzieren und so das Entdeckungsrisiko zu reduzieren und so die Überlebensfähigkeit zu erhöhen.

Die Erfindung wird somit vollständig im Absperrkörper realisiert und somit kann ein erfindungsgemäßer Absperrkörper auch nachträglich in ein bestehendes Ventil integriert werden. Der Ventilkörper, der für die Funktionsweise des Ventils notwendig ist und in dem der Absperrkörper beweglich angeordnet ist, ist somit nicht zwingender Bestandteil der Erfindung.

In einer weiteren Ausführungsform der Erfindung weist der Absperrkörper wenigstens zwei zweite Kanäle auf. Es können auch weitere zweite Kanäle vorgesehen sein. Hierbei gibt es für zwei oder mehr zweite Kanäle zwei Anordnungsformen. In der ersten Anordnungsform sind diese zweiten Kanäle auf der gleichen Seite des ersten Kanals angeordnet und zwar auf der Seite, welche bei einem Öffnen des Absperrkörpers zuerst durchströmt wird, also zuerst geöffnet wird. Dadurch hat der Absperrkörper eine klare Arbeitsrichtung. In einer zweiten Anordnungsform sind die zwei zweiten Kanäle gegenüberliegend angeordnet, sodass je nach Drehrichtung jeweils einer der beiden zweiten Kanäle in Öffnungsrichtung des Absperrkörpers vor dem ersten Kanal angeordnet ist. Dadurch ist der Absperrkörper unabhängig von der Drehrichtung betreibbar und zeigt den erfindungsgemäßen Effekt unabhängig von der Drehrichtung. Mehrere zweite Kanäle können hierbei unterschiedliche Querschnitte, insbesondere unterschiedliche Querschnittsflächen aufweisen. Insbesondere kann der in Drehrichtung vor dem ersten Kanal liegende zweite Kanal die größte Querschnittsfläche aufweisen, während die zu den Seiten daneben liegenden zweiten Kanäle immer kleinere Querschnittsflächen aufweisen.

In einer weiteren Ausführungsform der Erfindung ist die Nebenöffnung derart neben der ersten Öffnung angeordnet, sodass die Nebenöffnung bei völliger Öffnung des Absperrkörpers wieder verschlossen ist. Dieses hat den Vorteil, dass der Bremseffekt nur während des Öffnens auftritt, also in dem Moment, in dem der Druckgradient des Fluids durch das Einströmen ein besonders starken Transienten erzeugen kann. Bei vollständiger Öffnung ist dann der Strömungswiderstand im Absperrkörper wieder minimal.

In einer weiteren Ausführungsform der Erfindung weist die Nebenöffnung einen spitzen Winkel, und zwar in einem Winkel kleiner 45° zwischen der Achse des ersten Kanals und der Achse des zweiten Kanals am Ort der Nebenöffnung. Hierdurch werden der erste Kanal und der zweite Kanal an der Nebenöffnung in die gleiche Richtung durchströmt. Der Nebenauslass mündet in den ersten Kanal derart, dass der zweite Kanal einen Winkel von mehr als 90° zwischen der Achse des ersten Kanals und der Achse des zweiten Kanals am Ort des Nebenauslasses aufweist. Dieses führt dazu, dass die Strömungsrichtung eines den zweiten Kanals von der Nebenöffnung zum Nebenauslass durchströmenden Fluids der Strömungsrichtung des den ersten Kanals durchströmenden Fluids am Ort des Nebenauslasses wenigstens anteilig entgegengerichtet ist.

In einer weiteren Ausführungsform der Erfindung weist der Absperrkörper wenigstens einen dritten Kanal auf. Der dritte Kanal ist analog zum zweiten Kanal, nur auf der gegenüberliegenden Seite des ersten Kanals angeordnet. Der dritte Kanal weist eine weitere Nebenöffnung auf. Die weitere Nebenöffnung ist entweder neben der zweiten Öffnung angeordnet. Alternativ kann die weitere Nebenöffnung in den ersten Kanal benachbart zur zweiten Öffnung münden und in einem spitzen Winkel kleiner 45° zwischen der Achse des ersten Kanals und der Achse des dritten Kanals am Ort der Nebenöffnung angeordnet sein, sodass der erste Kanal und der dritte Kanal an der weiteren Nebenöffnung in die gleiche Richtung durchströmt werden. Der dritte Kanal weist einen weiteren Nebenauslass auf. Der weitere Nebenauslass ist an dem der weiteren Nebenöffnung gegenüberliegenden Ende des dritten Kanals angeordnet. Der weitere Nebenauslass mündet in den ersten Kanal. Der dritte Kanal ist in einem Winkel von mehr als 90° zwischen der Achse des ersten Kanals und der Achse des dritten Kanals am Ort des weiteren Nebenauslasses angeordnet, sodass die Strömungsrichtung des dritten Kanals der Strömungsrichtung des ersten Kanals am Ort des weiteren Nebenauslasses wenigstens anteilig entgegengerichtet ist. Somit entspricht der dritte Kanal funktional dem zweiten Kanal, ist jedoch am anderen Ende des ersten Kanals angeordnet und ermöglicht so den erfindungsgemäßen Effekt in die entgegengesetzte Strömungsrichtung. Damit ist eine Öffnung des Absperrkörpers in beide Strömungsrichtungen möglich. Dieses ist beispielsweise bevorzugt, wenn das Ventil T-förmig ausgebildet ist, um ein Fluid in eine Vorrichtung hin und wieder hinaus zu fördern.

In einer weiteren Ausführungsform der Erfindung weist der Absperrkörper wenigstens zwei dritte Kanäle auf. Es gilt das für mehrere zweite Kanäle gesagte analog.

In einer weiteren Ausführungsform der Erfindung ist die weitere Nebenöffnung derart neben der zweiten Öffnung angeordnet, sodass die weitere Nebenöffnung bei völliger Öffnung des Absperrkörpers wieder verschlossen ist. Dieses hat den Vorteil, dass der Bremseffekt nur während des Öffnens auftritt, also in dem Moment, in dem der Druckgradient des Fluids durch das Einströmen ein besonders starken Transienten erzeugen kann.

Bevorzugt sind der zweite Kanal und der dritte Kanal spiegelsymmetrisch zueinander.

In einer weiteren Ausführungsform der Erfindung weist der erste Kanal eine Querschnittserweiterung im Bereich des Nebenauslasses auf. Hierdurch können die Strömungsverhältnisse beim Zulauf der entgegenrichteten Strömung optimiert werden.

In einer weiteren Ausführungsform der Erfindung weist der Absperrkörper einen runden Querschnitt auf. Beispielsweise ist der Absperrkörper kugelförmig oder kegelförmig ausgebildet. Bevorzugt umläuft der erste Kanal den Mittelpunkt des Absperrkörpers um mehr als 180°. Hierdurch kann der Bauraum in Inneren des Absperrkörpers optimal ausgenutzt werden, auch wenn durch den längeren ersten Kanal dadurch der Strömungswiderstand insgesamt erhöht wird.

In einer weiteren Ausführungsform der Erfindung ist der Absperrkörper mittels additiver Fertigungstechnologien hergestellt. Durch die Herstellung im additiven Herstellungsverfahren sind innere Strukturen möglich, die mit abtragenden Verfahren nicht zu erzielen sind. Daher ist das additive Herstellungsverfahren für die zweiten Kanäle und dritten Kanäle besonders vorteilhaft. Ebenfalls eine optimale Ausnutzung des Raumes im Absperrkörper durch eine Verlängerung des ersten Kanals ist so einfacher zu realisieren. Es ist also nicht das additive Fertigungsverfahren an sich, welches dem Absperrkörper neue Eigenschaften verleiht, sondern es ermöglicht die komplexen Strukturen innerhalb des Absperrkörpers.

In einer weiteren Ausführungsform der Erfindung ist das Ventil ein Kugelhahn mit einem erfindungsgemäßen kugelförmigen Absperrkörper. Alternativ für ein anderes Ventil kann der Absperrkörper im Hahn beispielsweise auch zylinderförmig oder kegelstumpfförmig ausgebildet sein.

In einer weiteren Ausführungsform der Erfindung weist das Ventil einen Ventilkörper und einen im Ventilkörper angeordneten Absperrkörper auf, wobei die Nebenöffnung neben der ersten Öffnung angeordnet ist.

Der Ventilkörper weist einen Hauptkörperauslass auf, welcher im geöffneten Zustand mit der ersten Öffnung in Deckung gebracht wird. Weiter weist der Ventilkörper einen Nebenkörperauslass auf, welcher mit der Nebenöffnung in Deckung gebracht werden kann. Der Ventilkörper weist einen ersten Körperkanal und eine zweiten Körperkanal auf, wobei der erste Körperkanal mit dem Hauptkörperauslass und der zweite Körperkanal mit dem Nebenkörperauslass verbunden sind. Der zweite Körperkanal mündet an dem dem Nebenkörperauslass entgegengesetzten Ende in den ersten Körperkanal. Bevorzugt sind der Nebenkörperauslass und die Nebenöffnung nur im teilgeöffneten Zustand in Deckung, im vollständig geöffneten Zustand nicht fluchtend und somit der Durchfluss durch den zweiten Körperkanal und den zweiten Kanal verhindert. Insbesondere besteht nur eine Verbindung zwischen dem Nebenkörperauslass und dem Nebeneinlass nur in einem Bereich der Absperrkörperstellung, in dem die Durchflussöffnung des ersten Kanals zwischen 0 % und 75 %, bevorzugt zwischen 0 % und 50 % oder besonders bevorzugt zwischen 0 % und 25 % geöffnet ist, bezogen auf die weitestmögliche Öffnung des ersten Kanals.

Ein weiterer Aspekt der Erfindung betrifft Ventil mit einem erfindungsgemäßen Absperrkörper. Der Absperrkörper ist im Ventil drehbar angeordnet und dient zur Durchführung der Schaltvorgänge des Ventils. Der Absperrkörper kann in wenigstens eine erste Drehposition und eine zweite Drehposition verbracht werden. Das Ventil ist in der ersten Drehposition des Absperrkörpers für ein Fluid durchlässig und in der zweiten Drehposition für ein Fluid undurchlässig. Anders ausgedrückt, in der ersten Drehposition ist das Ventil offen, in der zweiten geschlossen. Hierbei ist, aus technischen Gründen zumeist die erste Drehposition exakt definiert (genau fluchtende Durchlässe), während die zweite Drehposition meist über einen größeren Bereich möglich ist (alle Durchlässe verschlossen). Dazwischen gibt es beim Öffnen und Schließen angesteuerte Zwischenzustände, wo die Durchlässe eben nur partiell geöffnet sind, was beispielsweise zur Regelung der Durchflussmenge genutzt werden kann.

Ein weiterer Aspekt der Erfindung betrifft ein Unterseeboot mit einem erfindungsgemäßen Absperrkörper.

Nachfolgend ist das erfindungsgemäße Absperrkörper anhand eines in den Zeichnungen dargestellten Ausführungsbeispiels näher erläutert.

Fig. 1 Absperrkörper - Stand der Technik
Fig. 2 erstes Beispiel
Fig. 3 zweites Beispiel
Fig. 4 drittes Beispiel
Fig. 5 viertes Beispiel
Fig. 6 fünftes Beispiel
Fig. 7 sechstes Beispiel

Gleiche Bauteile sind in den verschiedenen Ausführungsformen mit gleichen Bezugszeichen versehen.

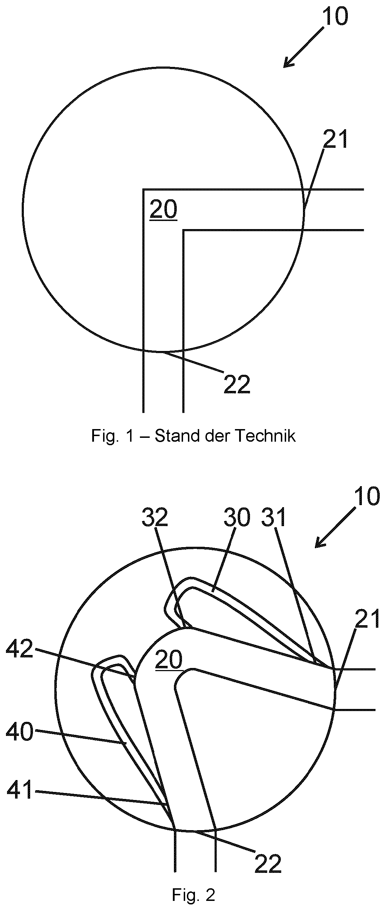

In Fig. 1 ist ein Absperrkörper 10 nach dem Stand der Technik zu sehen. Gezeigt ist eine Umlenkung von 90 ° zwischen der ersten Öffnung 21 und der zweiten Öffnung 22. Zusätzlich könnte links ein weitere Zu- oder Ablauf angeordnet sein, sodass der Absperrkörper 10 zwischen drei Stellungen schaltbar ist. Dieses gilt anlog auch für die folgenden Beispiele.

Fig. 2 zeigt ein erstes Beispiel. Benachbart zur ersten Öffnung 21 zweigt an der Nebenöffnung 31 ein zweiter Kanal 30 ab, der wie der erste Kanal durchströmt wird. Am Ende macht der zweite Kanal 30 eine Wendung, sodass der Nebenauslass 32 den durch den zweiten Kanal 30 fließenden Fluidstrom wenigstens anteilig im Gegenrichtung zum Fluidhauptstrom durch den ersten Kanal 20 führt. Auf der gegenüberliegenden Seite des ersten Kanals 20 ist in analoger Weise ein dritter Kanal 40 angeordnet. Die weitere Nebenöffnung 41 ist benachbart zur zweiten Öffnung angeordnet. Auch der dritte Kanal 40 macht am Ende eine Wendung, sodass der weitere Nebenauslass 42 den durch den dritten Kanal 40 fließenden Fluidstrom wenigstens anteilig im Gegenrichtung zum Fluidhauptstrom durch den ersten Kanal 20 führt. Durch die spiegelsymmetrische Ausführung kann ein erfindungsgemäßes Schalten in beide Drehrichtungen und unabhängig von der anliegenden Fluidflussrichtung erfolgen.

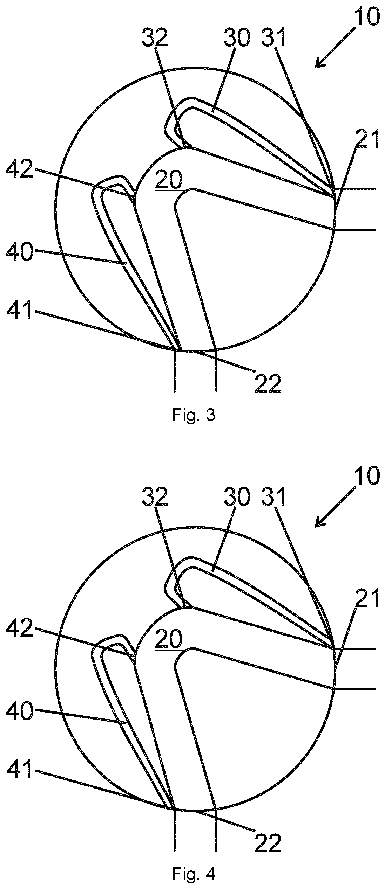

Das in Fig. 3 gezeigte zweite Beispiel unterscheidet sich von dem in Fig. 2 gezeigten ersten Beispiel dadurch, dass der Nebeneinlass 31 neben der ersten Öffnung 21 und der weitere Nebeneinlass 41 neben der zweiten Öffnung 22 angeordnet ist. Hiervon wiederum unterscheidet sich das in Fig. 4 gezeigte dritte Beispiel dadurch, dass der Nebeneinlass 31 derart neben der ersten Öffnung 21 angeordnet ist, dass der Nebeneinlass 31 bei vollständig geöffnetem Absperrkörper 10 nicht mehr durchströmt wird. Analog ist der weitere Nebeneinlass 41 derart neben der zweiten Öffnung 22 angeordnet ist, dass der weitere Nebeneinlass 41 bei vollständig geöffnetem Absperrkörper 10 nicht mehr durchströmt wird.

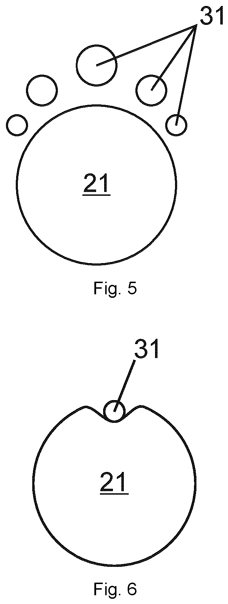

Fig. 5 zeigt einen Querschnitt durch die erste Öffnung 21 und damit ein viertes Beispiel. Das vierte Beispiel weist fünf Nebeneinlässe 31 auf, wobei der mittlere und in Drehrichtung vor dem ersten Einlass 21 liegende Nebeneinlass 31 einen größeren Querschnitt aufweist und die Nebeneinlässe 31 nach außen immer etwas kleiner werden.

Fig. 6 zeigt einen Querschnitt durch die erste Öffnung 21 und damit ein fünftes Beispiel. Das fünfte Beispiel weist einen Nebeneinlass 31 auf, der in einer Ausnehmung in der ersten Öffnung 21 angeordnet ist.

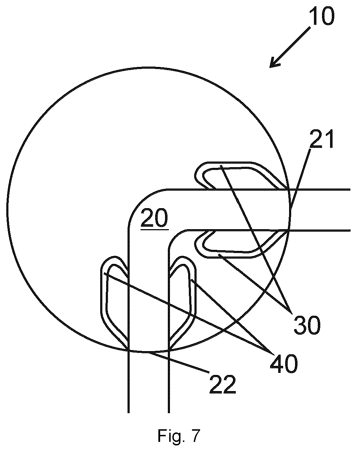

Um die Symmetrie und damit die Unabhängigkeit von der Drehrichtung weiter zu erhöhen weist das in Fig. 7 gezeigte sechste Beispiel in Drehrichtung jeweils einen zweiten Kanal 30 vor beziehungsweise hinter der ersten Öffnung 21 auf und in analoger weitere jeweils einen dritten Kanal 40 vor beziehungsweise hinter der zweiten Öffnung 22 auf. Dadurch wir dieses sechste Beispiel noch unabhängiger von Flussrichtung des Fluids und Drehrichtung.

Bezugszeichen

| 10 | Absperrkörper |
|---|---|
| 20 | erster Kanal |
| 21 | erste Öffnung |
| 22 | zweite Öffnung |
| 30 | zweiter Kanal |
| 31 | Nebenöffnung |
| 32 | Nebenauslass |
| 40 | dritter Kanal |
| 41 | weitere Nebenöffnung |
| 42 | weiterer Nebenauslass |

**Patentansprüche**

1. Absperrkörper (10) für ein Ventil, wobei der Absperrkörper (10) eine erste Öffnung und eine zweite Öffnung aufweist, wobei der Absperrkörper (10) zwischen der ersten Öffnung und der zweiten Öffnung einen ersten Kanal (20) aufweist, **dadurch gekennzeichnet, dass** der Absperrkörper (10) wenigstens einen zweiten Kanal (30) aufweist, wobei der maximale Querschnitt des zweiten Kanals (30) kleiner ist als der minimale Querschnitt des ersten Kanals (20), wobei der zweite Kanal (30) eine Nebenöffnung (31) hat, wobei die Nebenöffnung (31) entweder neben der ersten Öffnung angeordnet ist oder in den ersten Kanal (20) benachbart zur ersten Öffnung angrenzt,, wobei der erste Kanal (20) an der Nebenöffnung (31) eine erste Hauptströmungsrichtung aufweist, wobei der zweite Kanal (30) an der Nebenöffnung (31) eine erste Nebenströmungsrichtung aufweist, wobei die erste Hauptströmungsrichtung und die erste Nebenströmungsrichtung einen Winkel von weniger als 45 ° zueinander aufweisen, wobei der zweite Kanal (30) einen Nebenauslass (32) aufweist, wobei der Nebenauslass (32) an dem der Nebenöffnung (31) gegenüberliegenden Ende des zweiten Kanals (30) angeordnet ist, wobei der Nebenauslass (32) in den ersten Kanal (20) innerhalb des Absperrkörpers mündet, wobei der erste Kanal (20) an dem Nebenauslass (32) eine zweite Hauptströmungsrichtung aufweist, wobei der zweite Kanal (30) an dem Nebenauslass (32) eine zweite Nebenströmungsrichtung aufweist, wobei die zweite Hauptströmungsrichtung und die zweite Nebenströmungsrichtung einen Winkel von mehr als 90° zueinander aufweisen.

2. Absperrkörper (10) nach Anspruch 1, **dadurch gekennzeichnet, dass** der Absperrkörper (10) wenigstens zwei zweite Kanäle aufweist.

3. Absperrkörper (10) nach einem der vorstehenden Ansprüche, **dadurch gekennzeichnet, dass** die Nebenöffnung (31) einen spitzen Winkel kleiner 45° zwischen der Achse des ersten Kanals (20) und der Achse des zweiten Kanals (30) am Ort der Nebenöffnung (31) aufweist, wobei der zweite Kanal (30) einen Winkel von mehr als 90 ° zwischen der Achse des ersten Kanals (20) und der Achse des zweiten Kanals (30) am Ort des Nebenauslasses (32) aufweist.

4. Absperrkörper (10) nach einem der vorstehenden Ansprüche, **dadurch gekennzeichnet, dass** der Absperrkörper (10) wenigstens einen dritten Kanal (40) aufweist, wobei der dritte Kanal (40) eine weitere Nebenöffnung (41) hat, wobei die weitere Nebenöffnung (41) entweder neben der zweiten Öffnung angeordnet ist oder in den ersten Kanal (20) benachbart zur zweiten Öffnung und in einem spitzen Winkel kleiner 45° zwischen der Achse des ersten Kanals (20) und der Achse des dritten Kanals (40) am Ort der Nebenöffnung (41), sodass der erste Kanal (20) und der dritte Kanal (40) an der weiteren Nebenöffnung (41) in die gleiche Richtung durchströmt werden, wobei der dritte Kanal (40) einen weiteren Nebenauslass (42) aufweist, wobei der weitere Nebenauslass (42) an dem der weiteren Nebenöffnung (41) gegenüberliegenden Ende des dritten Kanals (40) angeordnet ist, wobei der weitere Nebenauslass (42) in den ersten Kanal (20) mündet, wobei der dritte Kanal (40) in einem Winkel von mehr als 90 ° zwischen der Achse des ersten Kanals (20) und der Achse des dritten Kanals (40) am Ort des weiteren Nebenauslasses (42) angeordnet ist, sodass die Strömungsrichtung des dritten Kanals (40) der Strömungsrichtung des ersten Kanals (20) am Ort des weiteren Nebenauslasses (42) wenigstens anteilig entgegengerichtet ist.

5. Absperrkörper (10) nach Anspruch 4, **dadurch gekennzeichnet, dass** der Absperrkörper (10) wenigstens zwei dritte Kanäle aufweist.

6. Absperrkörper (10) nach einem der vorstehenden Ansprüche, **dadurch gekennzeichnet, dass** der erste Kanal (20) eine Querschnittserweiterung im Bereich des Nebenauslasses (32) aufweist.

7. Absperrkörper (10) nach einem der vorstehenden Ansprüche, **dadurch gekennzeichnet, dass** der erste Kanal (20) den Mittelpunkt des Absperrkörpers (10) um mehr als 180 ° umläuft.

8. Absperrkörper (10) nach einem der vorstehenden Ansprüche, **dadurch gekennzeichnet, dass** der Absperrkörper (10) mittels additiver Fertigungstechnologien hergestellt ist.

9. Ventil mit einem Absperrkörper einem der vorstehenden Ansprüche, wobei der Absperrkörper im Ventil drehbar angeordnet ist, wobei der Absperrkörper wenigstens in eine erste Drehposition und eine zweite Drehposition verbracht werden kann, wobei das Ventil in der ersten Drehposition des Absperrkörpers für ein Fluid durchlässig und in der zweiten Drehposition für ein Fluid undurchlässig ist.

Fig. 1 – Stand der Technik

Fig. 2

Fig. 3

Fig. 4

31

<u>21</u>

Fig. 5

31

<u>21</u>

Fig. 6

Fig. 7

Europäisches
Patentamt
European
Patent Office
Office européen
des brevets

## EUROPÄISCHER RECHERCHENBERICHT

Nummer der Anmeldung

EP 25 19 1721

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 215 980 928 U (CO LTD) 8. März 2022 (2022-03-08) * Abbildung 1 * ----- | 1-9 | INV. F16K5/02 F16K5/06 F16K5/12 F16K47/04 |
| X | CN 111 465 791 A (METSO FLOW CONTROL OY) 28. Juli 2020 (2020-07-28) | 1,2,4-6, 9 | |
| A | * Abbildungen 1, 9, 10 * ----- | 3 | |

RECHERCHIERTE SACHGEBIETE (IPC)

F16K

Der vorliegende Recherchenbericht wurde für alle Patentansprüche erstellt

| Recherchenort | Abschlußdatum der Recherche | Prüfer |
|---|---|---|
| Den Haag | 19. November 2025 | Silea, Cristian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 25 19 1721

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2025

| Im Recherchenbericht angeführtes Patentdokument | Datum der Veröffentlichung | Mitglied(er) der Patentfamilie | Datum der Veröffentlichung |
|---|---|---|---|
| CN 215980928 U | 08-03-2022 | KEINE | |
| CN 111465791 A | 28-07-2020 | CN 111465791 A | 28-07-2020 |
| | | EP 3695146 A1 | 19-08-2020 |
| | | US 2019107227 A1 | 11-04-2019 |
| | | WO 2019073119 A1 | 18-04-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1329559 A
- CN 112901475 A